# EUROPEAN PATENT APPLICATION

(11) **EP 2 157 658 A1**
(43) Date of publication of application: **24.02.2010**
(21) Application number: 09176775.6
(22) Date of filing: 12.03.2007
(51) Int. Cl.: H01M 12/06, H01M 2/08, H01M 2/02

(54) **ZINC/AIR CELL**

(30) Priority: 22.03.2006 US 386885
(62) Divisional of application: 07735080.9
(71) Applicant: The Gillette Company, Boston, Massachusetts 02199 (US)
(72) Inventor: White, Leo J., Canton, CT 06109 (US); Gibbons, Daniel W., Southbury, CT 06488 (US); Bobowick, Derek R., Sandy Hook, CT 06482 (US)
(74) Representative: Mooij, Maarten

(57) **Abstract**

The invention relates to a metal/air cell having an anode can and a cathode can. The anode can has an open end, an opposing closed end, and integral side wall (263) therebetween, and includes an anode mixture comprising zinc particles and aqueous alkaline electrolyte. The cathode can has an open end, an opposing closed end, and integral side wall therebetween, the closed end having at least one air hole. Within the cathode can, a cathode is provided. An electrolyte permeable separator is provided between the cathode and the anode mixture, while an electrical insulator seal material is provided between the anode can and the cathode can. The open end of the anode can resides within the open end of the cathode can with a portion of the cathode can side wall overlapping a portion of the anode can side wall with insulating seal material in between. The insulator seal takes the form of an insulator seal ring having a plurality of protrusions emanating from an inside surface of an insulator ring side wall of the insulator seal ring, the protrusions facing the anode can side wall.

## Description

### FIELD OF THE INVENTION

The invention relates to a metal/air cell preferably in the form of a button cell having an anode comprising zinc, a catalytic cathode, and an improved insulator seal ring with compressible protrusions emanating from its surface.

### BACKGROUND

Zinc/air depolarized cells are typically in the form of miniature button cells which have particular utility as batteries for electronic hearing aids including programmable type hearing aids. Such miniature cells typically have a disk- like cylindrical shape of diameter between about 4 and 20 mm, typically between about 4 and 16 mm and a height between about 2 and 9 mm, preferably between about 2 and 6 mm. Zinc air cells can also be produced in somewhat larger sizes having a cylindrical casing of size comparable to conventional AAAA, AAA, AA, C and D size Zn/MnO₂ alkaline cells and even larger sizes.

The miniature zinc/air button cell typically comprises an anode casing (anode can), and a cathode casing (cathode can). The anode casing and cathode casing each have a closed end, an opposing open end and integral side walls therebetween extending from the closed end to the open end. The anode casing is fitted with an insulator seal ring which tightly surrounds the outside surface of the anode casing side wall. The insulator seal ring serves to electrically insulate the anode casing from the cathode casing. The insulator ring is also intended to provide a seal between anode casing and cathode casing to prevent electrolyte from leaking therebetween and out to the cell exterior. Anode material is inserted into the anode casing. Air diffuser, electrolyte barrier material, and cathode assembly are inserted into the cathode casing adjacent air holes in the cathode casing. The cathode assembly comprises a disk of cathode material coated and compacted onto a metal mesh screen. After the necessary materials are inserted into the anode and cathode casings, the open end of the cathode casing is typically pushed over the open end of the anode casing during assembly so that a portion of the cathode casing side walls covers a portion of the anode casing side wall with insulating seal therebetween. The anode and cathode casing are then interlocked in a second step by crimping the edge of the cathode casing over the insulator seal and anode casing. During the crimping procedure (or in a separate step) radial forces are also applied to the cathode casing walls to improve the seal between the anode and cathode casings. The cathode assembly which includes a disk of compacted cathode material may have a flat or domed shape. Some manufacturers may prefer the flat cathode assembly and others may prefer the domed assembly. Representative zinc/air button cells with flat cathode assemblies are shown in U.S. patents 5,279,905 and U.S. 6,602,629 B1 and a representative domed shaped cathode assembly is shown in U.S. 3,897,265.

The cathode disk typically comprising a mixture of particulate manganese dioxide (also possibly including Mn₂O₃ and Mn₃O₄), carbon, and hydrophobic binder can be coated and compacted onto a metal mesh screen. A cathode assembly is formed by laminating a layer of electrolyte barrier material (hydrophobic air permeable film), preferably TEFLON (polytetrafluoroethylene) material, to one side of the cathode disk and an electrolyte permeable (ion permeable) separator material to the opposite side of the cathode disk. The separator typically comprising a layer of microporous polypropylene is adhered or laminated to the side of the cathode disk intended to face the anode material so that the separator will lie between anode and cathode. The cathode assembly with separator attached thereto can then be inserted into the cathode casing over the air diffuser. The cathode assembly is inserted into the cathode casing so that the separator faces the open end of the cathode casing. The cathode disk in the completed cell contacts the inside surface of the cathode casing walls and the separator lies between the cathode and anode material.

The anode casing of zinc/air button cells may be filled with a mixture comprising particulate zinc. Typically, the zinc mixture contains mercury and a gelling agent and becomes gelled when electrolyte is added to the mixture. The electrolyte is conventionally an aqueous solution of potassium hydroxide. In the past zinc/electrolyte ratio in commercial zinc/air button cells would typically be under 3.3. Loading the anode casing with greater amount of zinc in relation to the electrolyte, that is, at higher zinc/electrolyte weight ratios has its allure. The greater amount of zinc in the fixed anode volume for a given size cell, can theoretically result in greater cell capacity and service life. Zinc/air button cells with higher zinc loading, that is, with higher zinc/electrolyte weight ratios in the anode have been attempted and are reported in the patent literature. See, Japanese Kokai publication No. 2000-21459 (Toshiba); Japanese patent 2,517,936 (Sony); and Japanese patent 3,647,218 (Toshiba). The references also allude to some of the problems associated with such higher loading of zinc in the anode. For, example, the problem of greater zinc anode expansion is mentioned as well as possible transient loss of electrical contact within the cell interior as the zinc expands.

Applicant has determined also that high zinc/electrolyte weight ratio in the anode, e.g. higher than about 3.3, for example between about 3.3 and 6.0 is that the expanding anode may exert transient mechanical forces against the cathode and also against the anode casing side walls. The rate of change of these mechanical forces can vary during the anode expansion. These increased mechanical forces and in particular the fluctuation of such forces during expansion of the anode material can weaken the tight seal between anode casing side walls and surrounding insulator ring.

Although most commercial zinc/air button cells presently contain added mercury in the anode, it has become desirable to develop zinc/air button cells which contain zero added mercury due to environmental concerns. However, if the cell contains zero added mercury, there is a greater chance for electrolyte leakage because of the greater tendency towards cell gassing due to the reduced amount of mercury in the cell. That is, increased cell gassing can result in higher internal cell pressure, which in turn may force electrolyte to leak between the anode casing and insulator seal interface, if such interface is not very tightly sealed.

The closed end of the cathode casing (when the casing is held in vertical position with the closed end on top) may have a flat raised portion near its center. This raised portion usually is the site of the positive terminal and typically contains a plurality of air holes therethrough. In this design, the cathode casing closed end also typically has an annular recessed step which surrounds the raised positive terminal. Alternatively, the closed end of the cathode casing may be completely flat across its diameter, that is, without any raised portion at its center. In such design the central portion of such flat area at the closed end of the cathode casing typically forms the cell's positive terminal. In either case, the closed end of the cathode casing of button zinc/air cells is punctured with one or more small air holes to allow air to enter the cell. Such air then traverses an air diffusion layer (or air diffuser) in order to reach the cathode assembly. Air diffuser material is applied against the air holes at the closed end of the cathode casing. The air diffuser is normally composed of one or more sheets of air permeable paper or porous cellulosic material. Such permeable paper or porous cellulosic material allows incoming air to pass uniformly to the cathode assembly and also may serve as a blotter to absorb minor amounts of electrolyte which may leak into the air inlet space.

If the cell is not adequately sealed, electrolyte can migrate around the catalytic cathode assembly and leak from the cathode casing through the air holes. Also electrolyte leakage can occur between the crimped edge of the cathode can and insulator if this area is not tightly sealed. The wall thickness of commercial zinc/air button cells are typically greater than about 6 mil (0.152 mm), for example, between about 6 and 15 mil (0.152 and 0.381 mm). The potential for leakage is greater when the anode casing and cathode casing is of very thin wall thickness, for example, between about 2 and 6 mil (0.0508 and 0.152 mm). Such low wall thickness is desirable, since it results in greater internal cell volume.

After the cell is assembled a removable tab is placed over the air holes on the surface of the cathode casing. Before use, the tab is removed to expose the air holes allowing air to ingress and activate the cell.

It is desired to produce a zero added mercury zinc/air cell. In such zero added mercury cell there is no added mercury and the only mercury present is in trace amounts naturally occurring with the zinc. Accordingly, the cell of the invention can have a total mercury content less than about 100 parts per million parts by weight of zinc, preferably less than 50 parts per million parts (ppm) by weight of zinc, more preferably less than about 20 parts per million parts by weight of zinc.

It is desired to increase the zinc loading, that is, to increase the zinc/electrolyte weight ratio in the anode of zinc/air cells, particularly zinc/air button cells. It is desired to increase the zinc/electrolyte weight ratio in the anode to a range between about 3.3 and 6.0.

It is desired to improve the tightness and durability of the seal interface between the outside surface of the anode casing side walls and the inside surface of the insulator ring, that is, at the anode casing/insulator interface. A tighter and more durable seal at the anode casing/insulator interface reduces the chance of electrolyte leakage or creep along such interface.

It is also desired to improve the tightness and durability of the seal interface between the outside surface of the insulator ring and inside surface of the cathode casing side walls, that is, at the cathode casing/insulator interface. A tighter and more durable seal at the cathode casing/insulator interface reduces the chance of electrolyte leakage or creep along such interface.

### SUMMARY OF THE INVENTION

The invention is directed to zinc/air cells, particularly miniature zinc/air cell in the form of button cells. Such miniature button cells typically have a cathode casing (cathode can) and an anode casing (anode can). There is at least one air hole, typically a plurality of air holes, running through the closed end of the cathode can. The anode casing and cathode casing are each shaped in the form of cans having an open end and opposing closed end with integral side walls therebetween.

The miniature zinc/air button cell of the invention typically has a disk- like cylindrical shape of diameter between about 4 and 20 mm, typically between about 4 and 16 mm, and a height between about 2 and 9 mm, preferably between about 2 and 6 mm. The zinc/air cells may have anode can and cathode can wall thickness, typically covering a range between about 2 mil and 15 mil (0.0508 and 0.381 mm). Desirably, the zinc/air cells may have thin anode can and cathode can walls of thicknesses between about 2.0 and 6 mils (0.0508 and 0.152 mm), for example, between about 2.0 and 5 mils (0.0508 and 0.127 mm).

An insulating seal is inserted over the anode casing side walls and thus tightly surrounds the outside surface of the anode casing side wall. The insulator seal is typically in the form of a hollow disk or ring. The hollow core of the ring is bounded by a circumferential side wall. The anode and cathode components are then inserted into the anode casing and cathode casing, respectively. The cathode casing is then pushed over the open end of the anode casing, that is, so that the insulating ring side walls lie between the anode casing and cathode casing side wall. The cathode casing is then crimped over the anode casing side walls with insulator seal ring therebetween. During crimping radial compressive forces are also applied inwardly against the cathode casing side walls, thereby compressing the cathode casing side walls against the insulator ring and in turn compressing the insulator ring against the anode casing side wall. This is intended to provide a tight insulating seal between anode casing and cathode casing side walls.

The improved seal of the invention is directed principally to metal/air button cells, particularly zinc/air button cells. The improved seal of the invention provides a tighter and more durable seal between the insulator ring side walls and the outside surface of the anode casing side walls, that is, at the anode casing/insulator seal interface. In another aspect the invention provides also for an improved seal between the insulator seal and cathode casing side wall, that is, at the insulator seal/cathode casing interface. The insulator seal ring is provided with "protrusions" which are preferably integrally formed on the inside surface or both inside and outside surface of the insulator ring side walls. During crimping as the cathode casing side walls are radially compressed inwardly against the insulating ring side walls, such protrusions are "compressed" providing a tighter seal between the anode casing and cathode casing (with insulator therebetween) than is possible without the protrusions. In particular the protrusions provide one or more solid barrier walls within the anode casing/insulator seal interface (and optionally also within the cathode casing/insulator seal interface) which prevents or else greatly retards electrolyte movement along the path of such interfaces.

In an aspect of the invention the improved seal has at least one protrusion, and preferably a plurality of protrusions emanating from the inside surface of the insulator ring side walls. The protrusions are preferably "integrally" formed during the molding of the insulator ring and will therefore be of the same material as the insulator ring. The protrusions can also be formed by etching, stamping, scraping, roughening, or by otherwise treating the insulator ring surface to form the protrusions after the insulator ring has been molded. In such cases the material of the protrusions is still the same as the molded insulator ring. Thus, the term "integral" or "integral protrusions" shall be understood to extend to such formation of the protrusions by etching, stamping, etc. of the molded insulator ring and also applies to protrusions formed during molding of the insulator ring. The insulator ring and protrusions emanating from the inside surface (or both inside and outside surface) of the insulator ring side walls are desirably of nylon material, preferably nylon 66. This material is durable, resistant to alkaline solutions and resistant to cold flow when squeezed, and can be readily injection molded into the desired insulator ring shape. However, the insulator ring and protrusions emanating therefrom may be formed of other grades of nylon or other electrically insulating material which are durable, resistant to alkaline solutions and cold flow. Such materials, for example, may be high density polyethylene, sulfonated polyethylene or polypropylene, or talc filled polypropylene, and the like.

Alternatively, instead of being integrally formed during molding or by etching, stamping or roughening the insulating ring surface, the protrusions may be formed from "globs" of material, which may be separately applied to the inside surface of the insulator ring side walls after the insulator has been molded. Such material may be different from the material from which the insulator ring is formed. For example, such globs of material may be formed of adhesive or tacky material or other compressible, durable material (resistant to attack by alkaline solutions), which is separately applied to the surface of the insulator ring surface. Such globs of adhesive material may preferably comprise a tacky polyamide. More specifically, such polyamide applied to the inside surface of the insulator ring in globs may comprise a low molecular weight thermoplastic polyamide resin. Such polyamide resin is desirably the reaction product of diamine with a dimerized fatty acid. The adhesive resin is readily dissolved in isopropyl or toluene solvent and may be applied in viscous globs to form the desired compressible protrusions emanating from the inside surface (or both inside and outside surface) of the insulator ring side walls.

In one aspect the protrusions may be in the form of globs of material or ribs protruding from the "inside surface" of the insulator ring side walls. These protrusions face the outside surface of the anode casing when the insulator ring is applied over the anode casing side walls. The globs of material are preferably integrally formed during molding of the insulator ring. They may typically be spherical, semispherical, oblong or polygonal in shape. Preferably such globs of material are spaced apart and aligned in one or more horizontal rows traversing the circumference of the inside surface of the insulator ring side walls. At least some of the globs of material from a horizontal row can be offset so that they underlie spaces between individual globs in an adjacent row. Each row of the globs of material form protrusions on the inside surface of the insulator ring side walls and preferably circumvent the cell's central longitudinal axis. Each row of such globs of material desirably lie in a plane, preferably perpendicular to the cell's central longitudinal axis.

The protrusions emanating from the "inside surface" of the insulating seal ring side walls may be in the form of ribs. The ribs are preferably straight but may also be curvilinear or arcuate shape. Each rib may run circumferentially substantially or completely around the inside surface of the insulating ring side walls. These ribs may be aligned in rows one under the other. The rows of such ribs are desirably parallel to each other. Alternatively, the ribs may be segmented and aligned in spaced apart arrangement circumventing the inside surface of the insulating ring. There may be a plurality of rows formed of such segmented ribs protruding from the inside surface of the insulating ring side walls. At least some of the ribs of material from a horizontal row can be offset so that they underlie spaces between individual segmented ribs in an adjacent row. The rows of segmented ribs are preferably parallel to each other. Each row of segmented ribs desirably lie in a plane preferably perpendicular to the cell's central longitudinal axis.

In addition to the protrusions, whether in the form of globs or ribs emanating from the inside surface of the insulator ring, there may be a tacky adhesive applied to the inside surface of the insulator ring. The tacky adhesive is applied so that it covers the exposed surface spaces on the inside surface of the insulator between the protrusions. The tacky adhesive may also be applied so that it covers the protrusions as well. A preferred adhesive for such application is a tacky polyamide. Such adhesive is preferably a low molecular weight thermoplastic adhesive resin which can be readily dissolved in solvent such as isopropyl alcohol or toluene to form a viscous tacky adhesive solution. A preferred adhesive resin for use as a tacky adhesive with which to coat said protrusions may be the reaction product of a diamine with a dimerized fatty acid.

In another aspect of the invention there may also be protrusions emanating from the "outside surface" of the insulating seal ring. These protrusions may be the same or similar to the protrusions described above. Thus, the protrusions may be in the form of globs of material or ribs protruding from the outside surface of the insulator ring side wall. These protrusions face the inside surface of the cathode casing side walls when the anode casing with insulating seal thereon is inserted into the cathode casing. The globs of material are preferably integrally formed during molding of the insulator ring. They may typically be spherical, semispherical, oblong or polygonal in shape. Preferably such globs of material are spaced apart and aligned in one or more horizontal rows traversing the circumference of the inside surface of the insulator ring. At least some of the globs of material from a horizontal row can be offset so that they underlie spaces between individual globs in an adjacent row. Each row of the globs of material form protrusions on the "outside surface" of the insulator ring side walls and preferably circumvent the cell's central longitudinal axis. Each row of such globs of material desirably lie in a plane, preferably perpendicular to the cell's central longitudinal axis.

The protrusions emanating from the "outside surface" of the insulating seal ring side walls may be in the form of ribs. The ribs are preferably straight but may also be curvilinear or arcuate shape. Each rib may run circumferentially substantially or completely around the outside surface of the insulating ring side walls. These ribs may be aligned in rows one under the other. The rows of such ribs are desirably parallel to each other. Alternatively, the ribs may be segmented and aligned in spaced apart arrangement circumventing the outside surface of the insulating ring side walls. There may be a plurality of rows formed of such segmented ribs protruding from the outside surface of the insulating ring side walls. At least some of the ribs of material from a horizontal row can be offset so that they underlie spaces between individual segmented ribs in an adjacent row. The rows of segmented ribs are preferably parallel to each other. Each row of segmented ribs desirably lie in a plane preferably perpendicular to the cell's central longitudinal axis.

Regardless of the shape and configuration of the protrusions emanating from the outside surface of the insulating side walls, there may be a tacky adhesive applied to the outside surface of the insulating seal side walls. The tacky adhesive is applied so that it covers the exposed surface spaces on the outside surface of the insulator ring side walls. The tacky adhesive may also be applied so that it covers the protrusions as well. A preferred adhesive for such application is a tacky polyamide. Such adhesive is preferably a low molecular weight thermoplastic adhesive resin which can be readily dissolved in solvent such as isopropyl alcohol or toluene to form a viscous tacky adhesive solution. A preferred adhesive resin for use as a tacky adhesive with which to coat said protrusions may be the reaction product of a diamine with a dimerized fatty acid. The adhesive may be in the form of a polyamide macromelt. In another aspect there may be protrusions emanating only on the inside surface of the insulator seal ring side walls and no protrusions on the outside surface of the seal ring side walls. In such case it is still desirable to have a tacky adhesive coating, desirably a polyamide adhesive coating, on the outside surface of the insulating seal side walls. This provides a greater degree of seal protection at the interface between the seal ring side walls and cathode casing.

The improved seal of the invention reduces the chance that electrolyte will leak from the cell due to increased gassing, which may occur if there is zero added mercury in the anode. In a zero added mercury cell, the mercury content is less that about 100 parts per million parts by weight of zinc, preferably less than 50 parts per million parts (ppm) by weight of zinc, more preferably less than about 20 parts per million parts by weight of zinc. The improved seal between the anode casing and insulator ring, that is, at the anode casing/insulator interface, reduces the chance of electrolyte leakage caused or promoted because of increased cell gassing due to zero added mercury in the anode.

The improved seal of the invention also reduces the chance of electrolyte leakage caused or promoted because of increased zinc/electrolyte weight ratios in the anode. It is desirable to increase the zinc loading in the anode mixture. This translates into a higher zinc/electrolyte weight ratio in the anode. It has been determined possible to utilize anode mixtures for zinc/air cells so that the zinc/electrolyte ratios are between about 3.0 and 6.0, desirably between about 3.3 and 6.0, preferably between about 4.0 and 5.5. In the context of such higher zinc/electrolyte ratios in the anode mixture, the potassium hydroxide (KOH) concentration is desirably between about 32 and 40 wt.%, for example, about 35 wt.%. The aqueous alkaline electrolyte typically desirably contains between 1 and 4 wt.% zinc oxide (ZnO), for example, about 2 wt.%. (If the zinc is amalgamated with mercury, the zinc content will be understood to include the mercury.)

The higher zinc/electrolyte weight ratios in the anode mixture are desirable because they have the potential of increasing the cell's discharge capacity and service life under normal discharge conditions. However, zinc anode mixtures expand during storage and discharge. The expansion is greater at higher zinc/electrolyte weight ratios. The expanding anode exerts transient mechanical forces against the anode casing side walls. Such increased mechanical forces, and in particular the fluctuation of such forces during expansion of the anode material, can weaken the seal at the interface between anode casing side walls and surrounding insulator ring. Possibly such transient forces could also weaken the seal at the interface between insulating seal and cathode casing. The improved seal of the invention can withstand increased mechanical forces due to increased anode expansion expected at higher zinc/electrolyte weight ratios. This reduces the chance that electrolyte will leak from the cell under these conditions.

In sum the improved seal of the invention results in a tight seal even if there is zero added mercury in the cell or if the zinc/electrolyte weight ratios are elevated, for example, between about 3.0 and 6.0, preferably between about 3.3 and 6.0, more preferably between about 4.0 and 5.5.

### BRIEF DESCRIPTION OF THE DRAWINGS

The invention will be better understood with reference to the drawings in which:
Fig. 1 is an isometric cross sectional view of an embodiment of the zinc/air cell of the invention.
Fig. 1A is an enlarged cross sectional of the seal area between anode can and cathode can of Fig. 1.
Fig. 1B is an enlarged cross sectional showing another embodiment of the seal area between anode can and cathode can of Fig. 1.
Fig. 2 is an exploded view of a preferred embodiment of the catalytic cathode assembly shown in Fig. 1.
Fig. 3A is a cross sectional elevation view of the insulating seal showing protrusions aligned in rows emanating from the inside surface of said seal.
Fig. 3B is a cross sectional elevation view of the insulating seal showing protrusions in offset row alignment emanating from the inside surface of said seal.
Fig. 4A is a cross sectional elevation view showing protrusions in the form of elongated continuous ribs aligned in rows emanating from the inside surface of said seal.
Fig. 4B is a cross sectional elevation view showing protrusions in the form of segmented ribs aligned in rows emanating from the inside surface of said seal.

### Detailed Description

The invention is directed principally to air depolarized electrochemical cells. Such cells have a metal anode, typically comprising zinc within an anode casing, and there is an air inlet to the cathode material within the cathode casing. The cell is commonly referred to as a metal/air or air-depolarized cell, and more typically a zinc/air cell.

The zinc/air cell of the invention is desirably in the form of a miniature button cell. It has particular application as a power source for small electronic devices such as hearing aids. But such cells may also be used to power other electronic devices. The miniature zinc/air button cell of the invention typically has a disk- like cylindrical shape of diameter between about 4 and 20 mm, for example, between about 4 and 16 mm, preferably between about 4 and 12 mm. The miniature zinc/air button cell has a height between about 2 and 9 mm, preferably between about 2 and 6 mm. The miniature zinc/air cell typically has an operating load voltage between about 1.3 Volts to 0.2 Volts. The cell typically has a substantially flat discharge voltage profile between about 1.1 and about 0.9 Volts whereupon the voltage can then fall fairly abruptly to zero. The miniature zinc/air cell can be discharged at a rate usually between about 0.2 and 25 milliAmperes. The term "miniature cells" or "miniature button cells" as used herein is intended to include such small size button cells, but is not intended to be restricted thereto, since other shapes and sizes for small zinc/air cells are possible. For example, zinc air cells could also be produced in somewhat larger sizes having a cylindrical casing of size comparable to conventional AAAA, AAA, AA, C and D size Zn/MnO₂ alkaline cells and even larger.

The cell of the invention may contain added mercury, for example, about 3 percent by weight of the zinc in the anode or can be essentially mercury free (zero added mercury cell). In such zero added mercury cells there is no added mercury and the only mercury present is in trace amounts naturally occurring with the zinc. Accordingly, the cell of the invention can have a total mercury content less than about 100 parts per million parts by weight of zinc, preferably less than 50 parts per million parts (ppm) by weight of zinc, more preferably less than about 20 parts per million parts by weight of zinc. (The term "essentially mercury free" as used herein shall mean the cell has a mercury content less than about 100 parts per million parts by weight of zinc.) The cell of the invention can have a very small amount of lead additive in the anode. If lead is added to the anode, the lead content in the cell can typically be between about 100 and 800 ppm of zinc in the anode. However, the cell desirably does not contain added amounts of lead and thus can be essentially lead free, that is, the total lead content is less than 30 ppm, desirably less than 15 ppm of zinc in the anode.

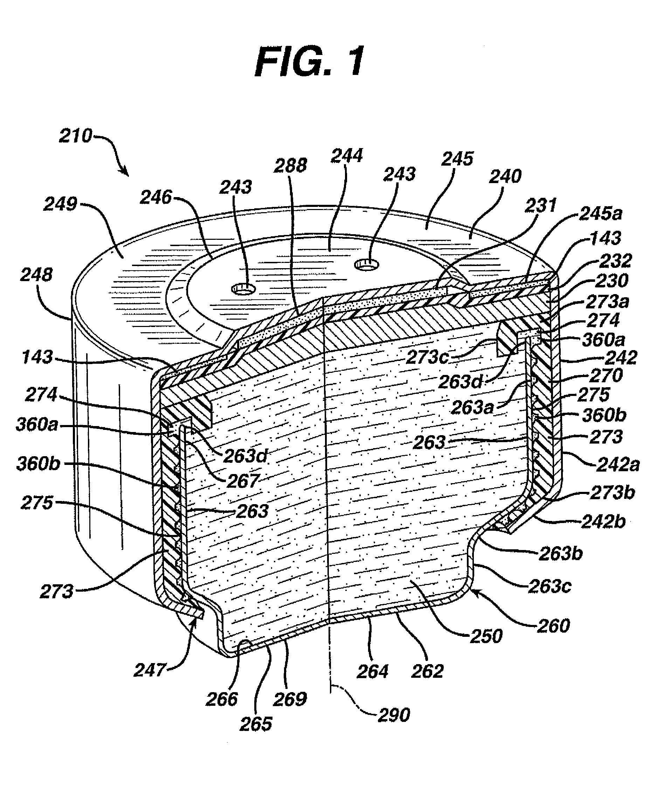

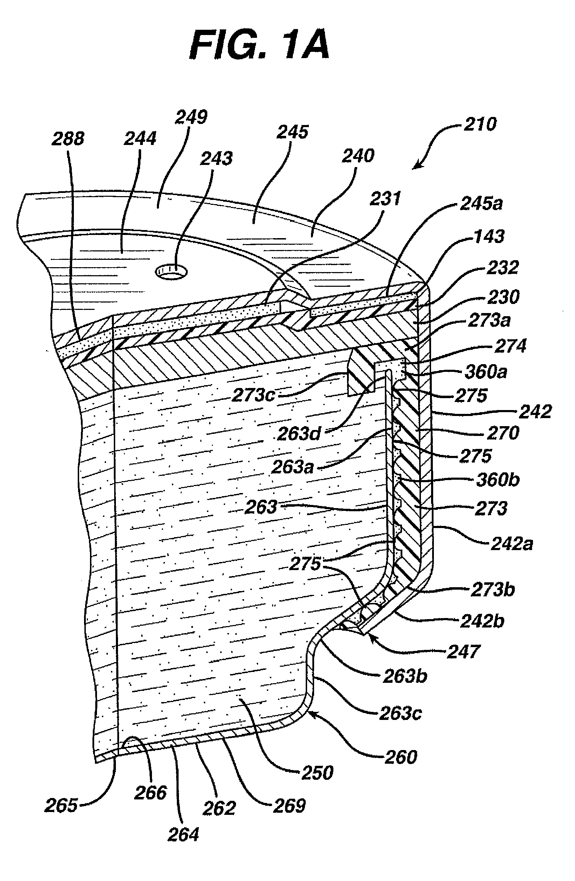

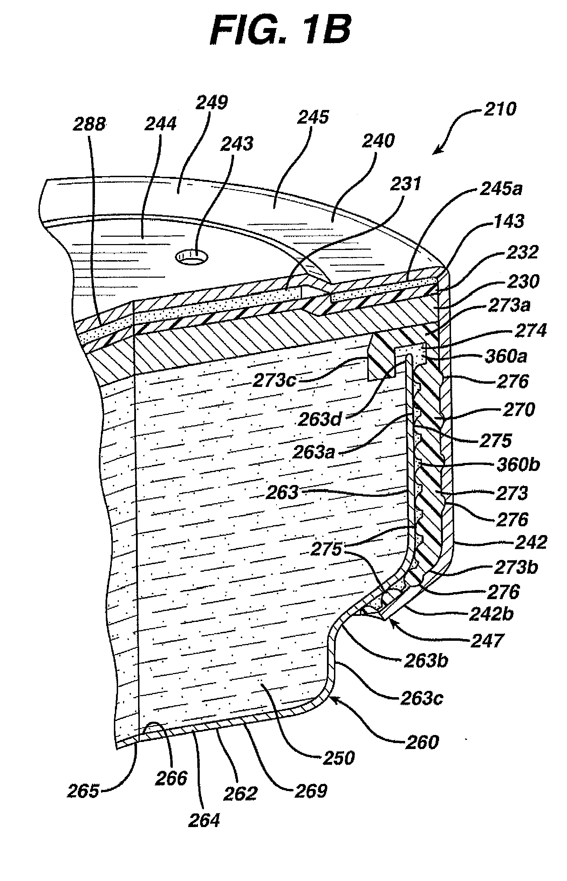

The zinc/air cell 210 of the invention (Fig. 1) has an anode casing 260, a cathode casing 240 and electrical insulator material 270 therebetween. The anode casing 260 and cathode casing 240 are preferably each in the form of a can or cup having a closed end and opposing open end. The anode casing 260 has body 263 forming the side walls, an integral closed end 269, and an open end 267. The cathode casing 240 has a body 242 (side walls), an integral closed end 249 and an open end 247. The closed end 249 of the cathode casing (when the casing is held in vertical position with the closed end on top) typically has a raised portion 244 near its center as shown in Fig. 1. This raised portion 244 can form the positive terminal contact area and typically contains a plurality of air holes 243 therethrough. The cathode casing closed end 249 also typically has an annular recessed step 245 which extends from the peripheral edge 246 of the raised terminal portion to the outer peripheral edge 248. Alternatively, the closed end 249 of cathode casing 240 may be flat.

A preferred embodiment of a complete zinc/air cell of the invention is shown in Fig. 1. The embodiment shown in Fig. 1 is in the form of a miniature button cell. The cell 210 comprises a cathode casing 240 (cathode can), an anode casing 260 (anode can) with an electrical insulator seal 270 therebetween. The insulator seal 270 is typically in the form of a hollow disk or ring with a hollow core bounded by circumferential side walls 273. The insulating seal ring 270 is inserted over the anode casing 260 and thus tightly surrounds the outside surface of anode casing side wall 263 (Fig. 1). A water resistant sealing adhesive 360b such as an asphalt or bitumen based sealant or preferably a polymeric sealant such a polyamide can be applied between the insulator seal 270 side wall 273 and the anode casing wall outside surface 263 a. The sealing adhesive 360b may be applied to the inside surface of insulator side wall 273 before the insulator seal ring 270 is inserted over the anode can wall 263. The head of insulator ring 270 desirably has an enlarged portion 273a extending beyond anode casing peripheral edge 263d and terminating in a curved end 273c (Fig. 1) forming a "J" configuration. The insulator 270 with enlarged portion 273a prevents anode active material from contacting the cathode casing 240 after the cell is assembled.

There is a cutout portion or cavity 274 within insulator 270 "J" shaped enlarged portion 273a. The tip end of 263d of the anode casing side wall 263 penetrates into cavity 274. An adhesive 360a, preferably a polyamide adhesive, is filled into cavity 274 to provide an adhesive seal between anode casing tip end 263d and insulating seal 270. Insulator seal 270 is desirably of nylon, preferably nylon 66. Insulator 270 may be of other durable electrically insulating material such as high density polyethylene, or high density polyethylene, sulfonated polyethylene, or talc filled polypropylene, and the like, which resists chemical attack by alkaline electrolyte and also resists cold flow when squeezed.

The improved seal of the invention is directed principally to metal/air button cells, particularly zinc/air button cells. In principal embodiment the improved seal of the invention provides a tighter and more durable seal between the insulator ring side walls 273 and the outside surface of the anode casing side walls 263, that is, at the anode casing/insulator seal interface. In other embodiments the invention provides for an improved seal also between the insulator seal side wall 273 and inside surface of the cathode casing side wall 242, that is, at the insulator seal/cathode casing interface.

The insulator seal ring 270 is provided with protrusions 275 which are preferably integrally formed on the inside surface or both inside and outside surface of the insulator ring side walls 273. During crimping as the cathode casing side wall are radially compressed inwardly against the insulating ring side walls 273, such protrusions 275 are also "compressed" providing a tighter seal between the anode casing 260 and cathode casing 240 (with insulator seal 270 therebetween) than is possible without such protrusions 275. In particular the protrusions 275 provide one or more solid barrier walls within the interface between anode casing side wall 263 and insulator seal side wall 273 inside surface (Fig. 1A). Optionally there are also similar protrusions 276 (Fig. 1B) between the cathode casing side wall 242 and insulator seal side wall 273 outside surface. These protrusions 275 and 276 prevent or else greatly retards electrolyte leakage along the path of such interfaces. The height of protrusions 275 emanating from the inside surface of insulator side wall 273 (Fig. 1A) may desirably be between about 0.5 and 3 mil (0.0127 and 0.0762 mm), preferably between about 1 and 3 mil (0.0254 mm and 0.0762 mm. The height of optional protrusions 276 emanating from the outside surface of insulator side wall 273 (Fig. 1B) may desirably be between about 0.5 and 3 mil (0.0127 and 0.0762 mm), preferably between about 1 and 3 mil (0.0254 mm and 0.0762 mm. Such protrusions have the property that they are at least partially compressible as the side wall 242 of cathode casing 240 is radially compressed against insulator side wall 273 during cell assembly. In a specific embodiment the improved insulator seal ring 270 has at least one protrusion 275, and preferably a plurality protrusions 275 emanating from the inside surface of the insulator ring side walls 273. The protrusions 275 are preferably "integrally" formed during the molding of the insulator ring 270 and may therefore be of the same material as insulator ring 270. The protrusions can also be formed by etching, stamping, scraping, roughening, or by otherwise treating the insulator ring surface to form the protrusions after the insulator ring has been molded. In such cases the material of the protrusions is the same as the molded insulator ring and thus, the term "integral" shall be understood to extend to such formation of the protrusions from the same material as the molded insulator ring. The insulator ring 270 and protrusions 275 emanating from the inside surface thereof are desirably of nylon material, preferably nylon 66. This material is durable, resistant to alkaline solutions. The material is also resistant to cold flow when squeezed (cold flow can elongate insulator side wall 273), and can be readily molded, preferably by injection molding into the desired insulator ring shape. However, the insulator seal ring 270 and protrusions (275 and 276, Fig. 1B) emanating therefrom may be formed of other grades of nylon or other electrically insulating material which are durable, resistant to alkaline solutions and cold flow when squeezed. Such materials, for example, may be high density polyethylene, sulfonated polyethylene or polypropylene, or talc filled polypropylene, and the like.

Alternatively, instead of being integrally formed during molding of insulating ring 270, the protrusions may be formed from globs of material, which may be separately applied to the inside surface of the insulator ring side walls 273 after the insulator has been molded. For example, such globs of material may be formed of adhesive or tacky material. Such globs of adhesive material may preferably comprise a compressible tacky polyamide. More specifically, such polyamide applied to the inside surface of the insulator ring in globs may comprise a low to medium weight molecular weight thermoplastic polyamide resin. Such polyamide resin is desirably the reaction product of diamine with a dimerized fatty acid. Such adhesive resin is readily dissolved in isopropyl or toluene solvent and may be applied in viscous globs to form the desired protrusions emanating from the inside surface of the insulator ring. Such viscous globs of material may be made using polyamide resin such as VERSAMID or REAMID resin from Henkel Corp.

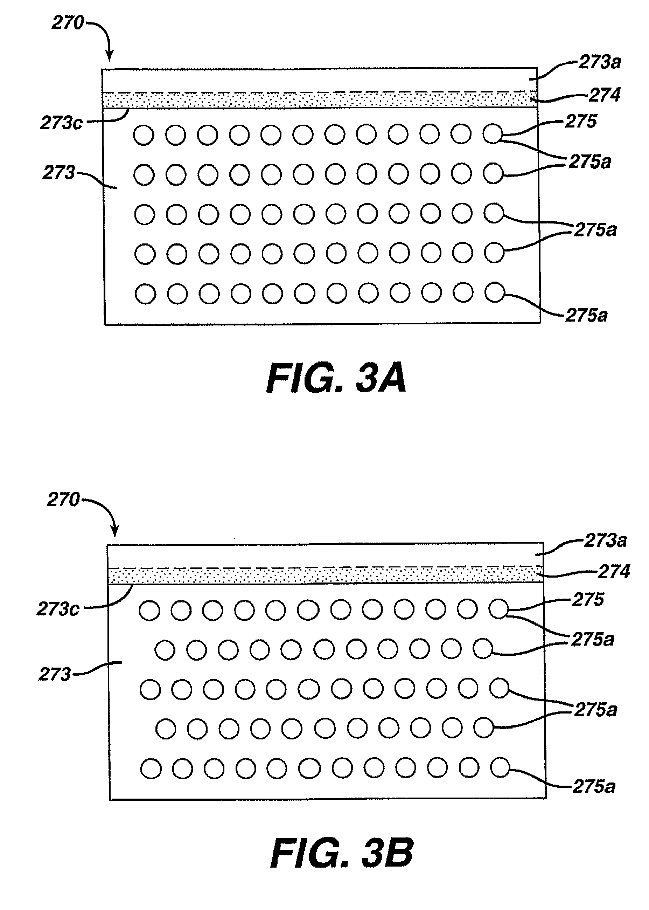

In a preferred embodiment the protrusions 275 may be in the form of globs of material 275a (Figs. 3A and 3B) protruding from the inside surface of the insulator ring side walls 273. These protrusions 275 face the outside surface 263a of the anode casing side wall 263 when the insulator ring 270 is applied over the anode casing side walls 263 as shown in Fig. 1A. The globs of material 275a are preferably integrally formed during molding of the insulator ring 270. They may typically be spherical, semispherical, oblong or polygonal in shape. Preferably such globs of material 275a are spaced apart and aligned in one or more horizontal rows traversing the circumference of the inside surface of the insulator ring side walls as shown in Figs. 3A or 3B. Each horizontal row of the globs of material 275a form protrusions 275 on the inside surface of the insulator ring side walls 273 and preferably circumvent the cell's central longitudinal axis 290. The horizontal rows of globs of material may be aligned so that individual globs of material 275a from one row to the next are also in straight vertical alignment as shown in Fig. 3A or offset as shown in Fig. 3B. Each horizontal row of such globs of material 275a desirably lies in a plane, preferably perpendicular to the cell's central longitudinal axis 290.

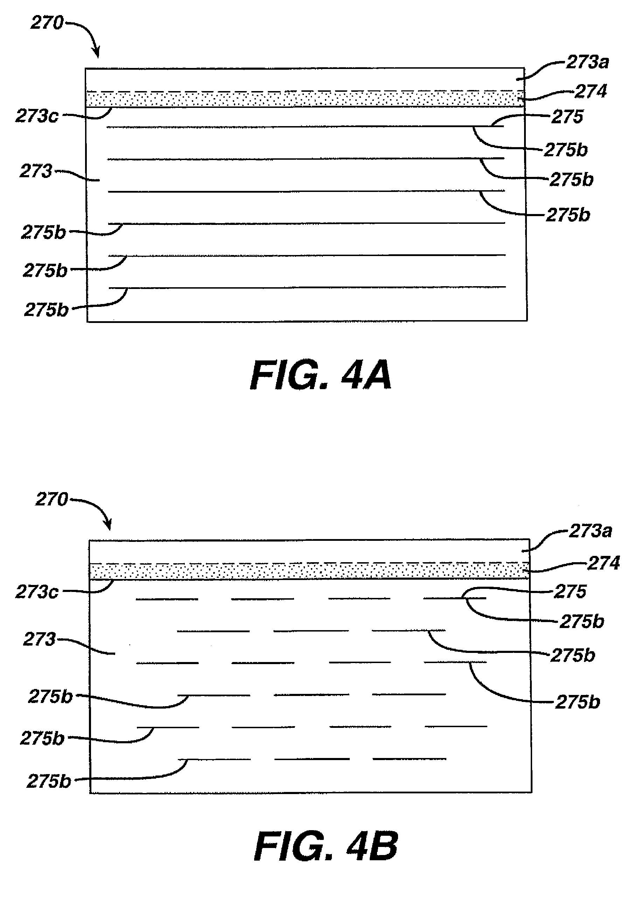

The protrusions 275 emanating from the inside surface of the insulating seal ring side walls 273 may also be in the form of ribs 275b as shown in Figs. 4A or 4B. The ribs 275b are preferably straight but may also be of curvilinear or arcuate shape. Each rib 275b may run circumferentially substantially or completely around the inside surface of the insulating ring side walls 273. These circumferential ribs 275b may be aligned in horizontal rows one under the other as shown in Fig. 4A. The individual rows of such ribs 275 a are desirably parallel to each other. Alternatively, the ribs may be segmented and aligned in spaced apart arrangement circumventing the inside surface of the insulating ring side wall 273 as shown in Fig. 4B. There may be a plurality of rows formed of such segmented ribs 275b protruding from the inside surface of the insulating ring side walls 273 as shown in Fig. 4B. The rows of segmented ribs 275b may be offset from one row to the next as shown in Fig. 4B. The horizontal rows of segmented ribs 275b are preferably parallel to each other. Each row of such segmented ribs desirably lie in a plane preferably perpendicular to the cell's central longitudinal axis 290.

In addition to the protrusions 275, whether in the form of globs (275a) or ribs (275b) emanating from the inside surface of the insulator ring wall 273, there may be a tacky adhesive 360b applied to said inside surface of the insulator ring side wall 273. The tacky adhesive 360b is applied so that it covers the exposed surface spaces on the inside surface of the insulator between the protrusions. The tacky adhesive may also be applied so that it covers the protrusions as well. A preferred adhesive for such application is a tacky polyamide. Such adhesive is preferably a low molecular weight thermoplastic adhesive resin which can be readily dissolved in solvent such as isopropyl alcohol or toluene to form a viscous tacky adhesive solution. A preferred adhesive resin for use as a tacky adhesive with which to coat said protrusions may be the reaction product of a diamine with a dimerized fatty acid. Such adhesive resin is available under the trade designation VERSAMID or REAMID resin from Henkel Corp. The adhesive 360b may be of same or similar composition to the polyamide adhesive 143 (underlying the closed end 249 of cathode casing 240) as disclosed and described in U.S. patent 6,436,156 B1 (Wandeloski) incorporated herein by reference.

In another preferred embodiment there may also be protrusions 276 emanating from the "outside surface" of the insulating seal ring side walls 273 (Fig. 1B). These protrusions may be the same or similar to protrusions 275 described above. Thus, the protrusions 276 may be in the form of globs of material similar to globs 275a (Figs. 3A or 3B) or ribs 275b (Fig. 4A or 4B) but protruding also from the outside surface of the insulator ring side wall 273. These protrusions 276 face the inside surface of the cathode casing side walls 242 as shown in Fig. 1B when the anode casing side walls 263 with insulating seal 270 thereon is inserted into the cathode casing 240. The globs of material 276 are preferably integrally formed during molding of the insulator ring 270. They may typically be spherical, semispherical, oblong or polygonal in shape. Preferably, such globs of material 276 are spaced apart and aligned in one or more horizontal rows traversing the circumference of the outside surface of the insulator ring similar to the alignment shown in Fig. 3B with respect to globs 275a. Each row of the globs of material 276 (Fig. 1B) form protrusions on the outside surface of the insulator ring side walls and preferably circumvent the cell's central longitudinal axis 290. Each row of such globs of material 276 desirably lie in a plane, preferably perpendicular to the cell's central longitudinal axis 290.

The protrusions 276 (Fig. 1B) emanating from the outside surface of the insulating seal ring side walls 273 may be in the form of ribs. The ribs are preferably straight but may also be curvilinear or arcuate shape. Each rib may run circumferentially substantially or completely around the "outside surface" of the insulating ring side walls 273. These ribs may be aligned in rows one under the other in configuration similar to that shown and described with respect to ribs 275b shown in Fig. 4A. The rows of such ribs are desirably parallel to each other. Alternatively, the protrusions 276 (Fig. 1B) may be in the form of segmented ribs which are aligned in spaced apart arrangement circumventing the outside surface of the insulating ring side walls 273. There may be a plurality of rows formed of such segmented ribs 276 protruding from the outside surface of the insulating ring side walls. These ribs may be aligned in offset horizontal rows one under the other in configuration similar to that shown and described with respect to ribs 275b shown in Fig. 4B. The rows of segmented ribs are preferably parallel to each other. Each row of segmented ribs desirably lie in a plane preferably perpendicular to the cell's central longitudinal axis 290.

Regardless of the shape and configuration of the protrusions 276 (Fig. 1B) emanating from the "outside surface" of the insulating side walls, there may be a tacky adhesive (not shown) applied to outside surface of the insulating seal side walls 273. The tacky adhesive is applied so that it covers the exposed surface on the outside surface of the insulator ring side walls 273. The tacky adhesive may also be applied so that it covers the protrusions 276 as well. A preferred adhesive for such application is a tacky polyamide as described above with respect to adhesive 360b. The adhesive may be in the form of a polyamide of the same or similar composition to the polyamide adhesive 143 (underlying the closed end 249 of cathode casing 240) as disclosed and described in U.S. patent 6,436,156 B1 (Wandeloski) incorporated herein by reference.

In another embodiment there may be protrusions 275 emanating only on the inside surface of the insulator seal ring side walls 273 and no protrusions 276 on the outside surface of the seal ring side walls. In such case it is still desirable to have a tacky adhesive coating, desirably a polyamide adhesive coating as above indicated on the outside surface of the insulating seal side walls 273. This provides a greater degree of seal protection at the interface between the seal ring side walls 273 and cathode casing wall 242.

The compressible protrusions 275 (and optionally also protrusions 276) provide barriers to prevent or retard electrolyte creep and/or leakage at the interfaces between insulator seal side wall 273 and anode casing wall 263 (and also between insulator seal side wall 273 and cathode casing wall 242). Thus, the improved seal of the invention reduces the chance that electrolyte will leak from the cell due to increased gassing, which may occur if there is zero added mercury in the anode. In a zero added mercury cell, the mercury content is less than about 100 parts per million parts by weight of zinc, preferably less than 50 parts per million parts (ppm) by weight of zinc, more preferably less than about 20 parts per million parts by weight of zinc. (If the cell contains zero added mercury, there is a greater chance for electrolyte leakage, because of the greater tendency towards cell gassing due to the reduced amount of mercury in the cell.)

The improved seal of the invention reduces the chance of electrolyte leakage which is promoted because of increased zinc/electrolyte weight ratios in the anode. It is desirable to increase the zinc loading in the anode mixture. This translates into a higher zinc/electrolyte weight ratio in the anode. It has been determined possible to utilize anode mixtures for zinc/air cells so that the zinc/electrolyte ratios are between about 3.3 and 6.0, preferably between about 4.0 and 5.5. The zinc/electrolyte weight ratios in the anode are between about 3.0 and 6.0 (wt.% zinc in the anode between about 75.0 wt.%, and 85.7 wt.%), desirably the zinc/electrolyte weight ratio in the anode is between about 3.3 and 5.5 (wt.% zinc in the anode between about 76.7 wt.% and 84.6 wt.%). Preferably the zinc/electrolyte weight ratio in the anode is between about 4.0 and 5.5 (wt.% zinc in the anode between about 80.0 and 84.6 wt%). The electrolyte is an aqueous alkaline electrolyte mixture, preferably an aqueous mixture comprising potassium hydroxide, which typically contains about 2 wt.% zinc oxide (ZnO). In the context of such higher zinc/electrolyte ratios in the anode mixture, the potassium hydroxide (KOH) concentration is desirably between about 30 and 40 wt.%, preferably between about 32 and 40 wt.%, for example, about 35 wt.%. (If the zinc is amalgamated with mercury, the zinc content will be understood to include the mercury.) The higher zinc/electrolyte weight ratios in the anode mixture are desirable because they have the potential of increasing the cell's discharge capacity and service life under normal discharge conditions. However, zinc anode mixtures expand during storage and discharge. The expansion is greater at higher zinc/electrolyte weight ratios. The expanding anode exerts transient mechanical forces against the anode casing side walls. The rate of change of these mechanical forces can vary during the anode expansion. These increased mechanical forces and in particular the fluctuation of such forces during expansion of the anode material can weaken a tight seal between anode casing side walls and surrounding insulator ring. The improved seal of the invention between the anode casing side walls 263 and insulator ring wall 273, that is, at the anode casing/insulator interface, is durable and provides both tight mechanical and adhesive bond between the anode casing side wall and the insulator ring. The improved seal of the invention between the anode casing side walls 263 and insulator ring side wall 273 (and also between the insulator ring side wall 273 and cathode casing side walls 242) can withstand increased mechanical forces due to increased anode expansion expected at higher zinc/electrolyte weight ratios. This reduces the chance that electrolyte will leak from the cell under these conditions.

In sum the improved seal of the invention results in a tight seal even if there is zero added mercury in the cell or if the zinc/electrolyte weight ratios are elevated, for example, between about 3.0 and 6.0, preferably between about 3.3 and 6.0, more preferably between about 4.0 and 5.5.

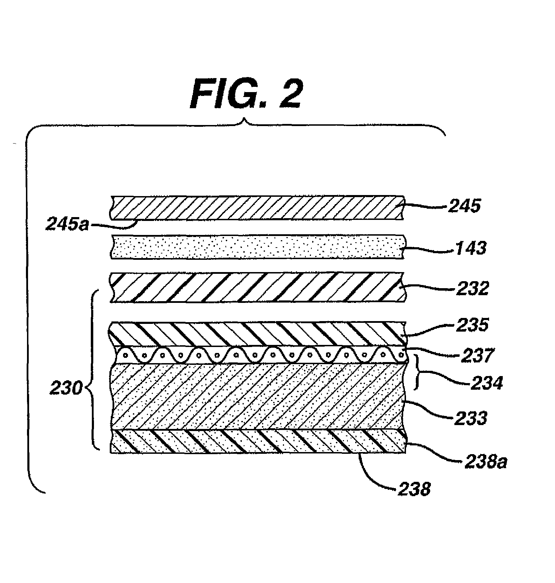

In a specific embodiment the anode casing 260 (anode can) contains an anode mixture 250 comprising particulate zinc and alkaline electrolyte. The particulate zinc is desirably alloyed with between about 100 and 1000 ppm indium. The zinc particles may also be plated with additional indium, preferably between about 100 and 1500 ppm indium. The cathode casing 240 has a plurality of air holes 243 in the raised portion 244 of its surface at the closed end thereof. A cathode catalytic assembly 230 containing a catalytic composite material 234 (Fig. 2) is placed within the casing proximate to the air holes. The catalytic composite 234 comprises a catalytic cathode mixture 233 in the form of a disk coated on a screen 237. During cell discharge, the catalytic material 233 facilitates the electrochemical reaction with ambient oxygen as it ingresses through air holes 243. An adhesive sealant 143 is applied along a portion of the inside surface of cathode casing 240 at the closed end 249 thereof. In a preferred embodiment the adhesive can be applied as a continuous ring on the inside surface 245a of recessed annular step 245 at the closed end 249 of the casing as shown in Fig. 1 and as also described in U.S. patent 6,436,156 B1. If the closed end of the cathode casing is flat, that is, does not have a recessed step 245, the adhesive sealant 143 can be applied to the inside surface of the closed end 249 adjacent the outer peripheral edge 248 of said closed end. In such latter case the adhesive sealant 143 is desirably applied as a continuous ring to the inside surface of closed end 249 such that the continuous ring of adhesive 143 has an outside diameter of between about 75 percent and 100 percent, preferably between about 90 and 100 percent, more preferably between about 95 and 100 percent of the inside diameter of closed end 249.

A representative cathode casing 240 (cathode can) is shown in Fig. 1. The cathode casing 240 is in the form of a can which has a closed end 249 and opposing open end 247 with body 242 (side walls) therebetween. The central portion 244 at the closed end 249 may be raised (as shown) and can form the positive terminal contact region. However, the entire closed end 249 may be flat, that is, without any raised central portion. There are one or more air holes 243 through the cathode casing closed end 249. There is an air inlet space 288 (plenum region) between the cathode casing closed end 249 and cathode assembly 230. Generally, the air inlet space 288 (plenum region) may be regarded as the available space between the inside surface of the cathode casing closed end 249 and cathode assembly 230 before any air diffuser material 231 is inserted therein. Conventionally, the air diffuser material is composed of air permeable paper or porous cellulosic material, which is normally inserted to completely fill the available air inlet space 288.

In the embodiment shown in Fig. 1 there is a raised central portion 244 at the cathode casing closed end 249. In this embodiment (Fig. 1) the air inlet space 288 (plenum region) is the available space between the inside surface of the raised portion 244 of cathode casing closed end 249 and cathode assembly 230 before air diffuser material (or comparable) is inserted therein. (For the purposes of this description any electrolyte barrier sheet, such as electrolyte barrier sheet 232 on the cathode assembly 230, may be considered as part of the cathode assembly 230.) There are one or more air holes 243 through said raised portion 244. In a representative cathode casing 240, for example, for a 312 size cell, namely, button cell with overall diameter 0.304 inch (7.72 mm) and height 0.135 inch (3.43 mm), there may typically be five equispaced air holes 243 each of diameter between about 0.0045 and 0.012 inches (0.114 and 0.305 mm) through the raised portion 244 of the cathode casing closed end 249. However, it will be appreciated that there may be more air holes or as few as a single air hole depending on the size of the cell and size of the air hole, which may be somewhat more or less than the above specified hole size.

A cathode catalytic assembly 230 (Figs. 1 and 2) can be formed by first coating cathode material onto mesh screen 237 to form cathode composite 234. One side of cathode composite 234 may be laminated with a layer of hydrophobic electrolyte barrier film material 235, preferably TEFLON (polytetrafluoroethylene) material and an optional second TEFLON layer 232 added. The electrolyte barrier film 235, preferably of TEFLON, has the property that it is permeable to air, yet keeps water and electrolyte from passing therethrough. The barrier film layer 235 can be applied to the cathode composite 234 by application of heat and pressure. Separator material 238 is glued or laminated to the opposite side of cathode composite 234, preferably directly to the exposed side of cathode material 233 to form the completed cathode assembly 230 (Fig.2).

In a preferred embodiment of the zinc/air cell the edge of cathode catalytic assembly 230 can be applied to adhesive ring 143 on step 245 thereby providing a permanent adhesive seal between the cathode assembly 230 and casing step 245. The cathode catalytic assembly 230 can be applied to adhesive 143 on step 245 with the electrolyte barrier 235 contacting adhesive 143 directly. (Optionally an additional electrolyte barrier sheet 232 (Figs. 1 and 2) may be overlaid on electrolyte barrier 235 and bonded to adhesive 143 as described in the following paragraph.) The use of adhesive sealant 143 also reduces the amount of crimping force needed during crimping the outer peripheral edge 242b over the anode casing body. This is particularly advantageous with thin walled anode and cathode casings 240 and 260 of wall thickness between about 0.001 inches (0.0254 mm) and 0.015 inches (0.38 mm), particularly with anode and cathode casing wall thicknesses between about 0.002 and 0.005 inches (0.0508 and 0.127 mm). The use of adhesive sealant 143 is also advantageous when thin catalytic cathode assemblies 230 are employed, since high crimping forces could possibly distort or crack such thin casings and cathode assemblies.

The anode casing 260 and cathode casing 240 are initially separate pieces. The anode casing 260 and cathode casing 240 are separately filled with active materials, whereupon the open end 267 of the anode casing 260 can be inserted into the open end 247 of cathode casing 240. The anode casing 260 can have a straight (unfolded) side wall 263 as shown in Figs. 1. Alternatively, side wall can be once folded forming a double side wall (not shown). Such folded side wall may be employed advantageously when employing very thin walled anode casings, e.g. between about 1 and 5 mil (0.0254 and 0.127 mm), or zero added mercury anode 250 mixtures regardless of anode casing wall thickness. The anode casing side wall 263 is vertically straight and terminates in an inwardly slanted portion 263b which terminates in a second downwardly extending vertical portion 263c as shown in Fig. 1. The portion 263c terminates with a 90[deg.] bend forming the closed end 269 having a preferably flat negative terminal surface 265.

The body 242 of cathode casing 240 has a straight portion 242a of maximum diameter extending vertically downwardly from closed end 249. The body 242 terminates in peripheral edge 242b. The peripheral edge 242b of cathode casing 240 and underlying peripheral edge 273b of insulator ring 270 are initially vertically straight as shown in Figs. 3 and 4 and can be mechanically crimped over the slanted midportion 263b of the anode casing 260 as shown in Fig. 5. Such crimping locks the cathode casing 240 in place over the anode casing 260 and forms a tightly sealed cell.

Anode casing 260 can be separately filled with anode active material by first preparing a mixture of particulate zinc and powdered gellant material. The zinc average particle size is desirably between about 30 and 350 micron. The zinc can be pure zinc but is preferably in the form of particulate zinc alloyed with indium (100 to 1500 ppm). The zinc can also be in the form of particulate zinc alloyed with indium (100 to 1000 ppm) and lead (100 to 1000 ppm). Other alloys of zinc, for example, particulate zinc alloyed with indium (100 to 1500 ppm) and bismuth (100 to 1000 ppm) can also be used. Such zinc alloys are particularly useful in the context of an anode mixture 250 having zero added mercury. These particulate zinc alloys are essentially comprised of pure zinc and have the electrochemical capacity essentially of pure zinc. Thus, the term "zinc" shall be understood to include such materials.

The gellant material can be selected from a variety of known gellants which are substantially insoluble in alkaline electrolyte. Such gellants can, for example, be cross linked carboxymethyl cellulose (CMC); starch graft copolymers, for example in the form of hydrolyzed polyacrylonitrile grafted unto a starch backbone available under the designation Waterlock A221 (Grain Processing Corp.); cross linked polyacrylic acid polymer available under the trade designation Carbopol C940 (B. F. Goodrich); alkali saponified polyacrylonitrile available under the designation Waterlock A 400 (Grain Processing Corp.); and sodium salts of polyacrylic acids termed sodium polyacrylate superabsorbent polymer available under the designation Waterlock J-500 or J-550. A dry mixture of the particulate zinc and gellant powder can be formed with the gellant forming typically between about 0.1 and 1 percent by weight of the dry mixture. A solution of aqueous KOH electrolyte solution comprising between about 30 and 40 wt% KOH and about 2 wt% ZnO is added to the dry mixture and the formed wet anode mixture 250 can be inserted into the anode casing 260. Alternatively, the dry powder mix of particulate zinc and gellant can be first placed into the anode casing 260 and the electrolyte solution added to form the wet anode mixture 250.

A catalytic cathode assembly 230 (Figs. 1 and 2) and air diffuser 231 can be inserted into casing 240 as follows: An air diffuser material 231 (Fig. 1), which can be in the form of an air porous filter paper or porous polymeric material can be inserted into the air inlet region 288 of the cathode casing 240 so that it lies against the inside surface of raised portion 244 of the casing against air holes 243. (Air inlet region 288 is the region underlying the air holes 243 and thus lies between the inside surface of cathode casing portion 244 and cathode assembly 230 including any electrolyte barrier layer 232 thereon.) An adhesive sealant ring 143 is desirably applied to the inside surface 245a of recessed step 245 at the closed end of the cathode casing. A separate electrolyte barrier layer 232 (Figs. 1 and 2), for example, of polytetrafluroethylene (TEFLON material) which becomes a part of the cathode assembly 230 can optionally be inserted on the underside of the air diffuser material 231 so that the edge of the barrier layer 232 contacts adhesive ring 143. Barrier layer 232 is permeable to air but not permeable to the alkaline electrolyte or water. The adhesive ring 143 thus permanently bonds the edge of barrier layer 232 to the inside surface of recessed step 245. The adhesive ring 143 with barrier layer 232 bonded thereto prevents electrolyte from migrating from the anode to and around cathode catalytic assembly 230 and then leaking from the cell through air holes 243.

A catalytic cathode assembly 230 as shown in Fig. 2 can be prepared as a laminate comprising a layer of electrolyte barrier material 235, a cathode composite disk 234 under the barrier layer 235 and a layer of ion permeable separator material 238 under the catalyst composite 234, as shown in Fig. 2. Preferably catalyst composite 234 is oriented so that electrolyte barrier material 235 is applied to catalyst composite 234 so that it abuts or is closer to the mesh screen 237 side of catalyst composite 234. Conversely, separator 238 is preferably applied to the side of catalyst composite 234 which is further away from mesh screen 237, that is, so that separator 238 contacts catalytic cathode mixture 233 directly (Fig. 2). Separator 238 may be laminated or adhered to cathode 233 employing an electrolyte permeable adhesive such as polyvinylalcohol. The separator 238 can be selected from conventional ion permeable separator materials including polyvinylalcohol, cellophane, polyvinylalcohol, polyvinylchloride, polyvinylacetate/cellulose, acrylonitrile, fibrous or microporous polypropylene, or polyamide nonwoven fiber. The electrolyte barrier layers 232 and 235 can desirably be of polytetrafluroethylene (TEFLON material).

Catalytic cathode composite 234 desirably comprises a catalytic cathode mixture 233 of particulate manganese dioxide, carbon, and hydrophobic binder which is applied by conventional coating methods to a surface of an electrically conductive screen 237. Screen 237 may be of woven metallic fibers, for example, nickel or nickel plated steel fibers. The cathode mixture 233 is formed in the shape of a flat or at least substantially flat disk, which may be termed herein as the cathode disk. Other catalytic materials may be included or employed such as metals like silver, platinum, palladium, and ruthenium or other oxides of metals or manganese (MnOₓ) and other components known to catalyze the oxygen reduction reaction. During application the catalytic mixture 233 is coated and compacted onto porous mesh of screen 237 so that much of it becomes absorbed into the screen mesh. The manganese dioxide used in the catalytic mixture 233 can be conventional battery grade manganese dioxide, for example, electrolytic manganese dioxide (EMD). The carbon used in preparation of mixture 233 can be in various forms including graphite, carbon black and acetylene black. A preferred carbon is carbon black because of its high surface area. A suitable hydrophobic binder can be polytetrafluroethylene (TEFLON). The catalytic mixture 233 may typically comprise between about 3 and 12 percent by weight manganese oxides, e.g. MnO₂; 30 and 55 percent by weight carbon, and remainder binder. During cell discharge the catalytic mixture 233 acts primarily as a catalyst to facilitate the electrochemical reaction involving the incoming air. However, additional manganese dioxide can be added to the catalyst along with electrolyte and the cell can be converted to an air assisted zinc/air or air assisted alkaline cell. In such cell, which can be in the form of a button cell, at least a portion of manganese dioxide becomes discharged, that is, some manganese is reduced during electrochemical discharge along with incoming oxygen.

In the preferred embodiment (Fig. 1) the anode casing 260 has a layer of copper 266 plated or clad on its inside surface so that in the assembled cell the zinc anode mix 250 contacts the copper layer. The copper plate is desired because it provides a highly conductive pathway for electrons passing from the anode 250 to the negative terminal 265 as the zinc is discharged. The anode casing 260 is desirably formed of stainless steel which is plated on the inside surface with a layer of copper. Preferably, anode casing 260 is formed of a triclad material composed of stainless steel 264 with a copper layer 266 on its inside surface and a nickel layer 262 on its outside surface as shown in Fig. 1. Thus, in the final assembled cell 210 (Fig. 1) the copper layer 266 forms the anode casing inside surface in contact with the zinc anode mix 250 and the nickel layer 262 forms the anode casing's outside surface.

By way of a specific non-limiting example, the cell size could be a standard size 312 zinc/air cell having an outside diameter of between about 0.3025 and 0.3045 inches (7.68 and 7.73 mm) and a height of between about 0.1300 and 0.1384 inches (3.30 and 3.52 mm). The anode 250 can contain zero added mercury (mercury content can be less than 50 parts mercury per million parts by weight of zinc). A desirable representative anode mixture (with zero added mercury) and elevated zinc/electrolyte weight ratio can thus have the following composition (e.g. Zinc/electrolyte weight ratio of 4.2): zinc 80.6 wt.% (the zinc can be alloyed with 200 to 800 ppm each of indium and lead), electrolyte 19.1 wt.% (35 wt% KOH and 2 wt% ZnO), gelling agent 0.3 wt%. Sufficient anode material 250 is supplied to fill for example, between about 70 and 80 percent, typically between about 70 and 75 percent of the anode cavity (internal volume of anode casing 260 bounded on top by separator 238). The cathode catalyst composite 234 can have the following composition: Manganese oxides (MnO₂, Mn₂O₃, and Mn₃O₄) (6 wt.%); carbon black particles (51.5 wt.%) and TEFLON binder (42.5 wt.%).

The anode casing 260 may be drawn to the shape shown in Fig. 1, for example, having straight side walls 263. The anode material 250 is inserted into the anode casing 260 and insulator seal ring 270 inserted over anode casing side walls 263. Air diffuser 231 and cathode assembly 230 is inserted into cathode casing 240 against air holes 243. The cathode casing side walls 242 is then pushed over the outside surface insulator 270. Crimping forces are applied to crimp edge 242b of cathode casing 240 over slanted surface 263b of the anode casing 260 with insulator edge 273b therebetween. Radial forces may be applied to the cathode casing side walls 242 during crimping. The application of such radial forces against the cathode casing compresses the protrusions 275 against the anode casing side wall 263. The compression of such protrusions provides a tighter more durable seal at the interface between anode casing side wall 263 and insulator side wall 273. Similarly, if protrusions 276 are employed on the outside surface of insulating side wall 273, the application of radial compressive forces against the cathode casing during crimping also compresses such protrusions 276 against the cathode casing side walls 242. This provides a tighter seal at the interface between the insulator seal side wall 273 and cathode casing side wall 232.

Although the invention has been described with reference to specific embodiments, it should be appreciated that other embodiments are possible without departing from the concept of the invention. Thus, the invention is not intended to be limited to the specific embodiments but rather its scope is reflected by the claims and equivalents thereof.

## Claims

1. A metal/air cell comprising:
- an anode can (260) and a cathode can (240);
- an anode mixture (250) comprising zinc particles and aqueous alkaline electrolyte within said anode can, wherein said anode can comprises an open end (267) and opposing closed end (269) and integral side wall (263) therebetween;
- a cathode within said cathode can, wherein the cathode can comprises an open end (247) and opposing closed end (249) and integral side wall (242) therebetween, the closed end having at least one air hole (243);
- an electrolyte permeable separator (238) between said cathode and anode mixture; and
- an electrical insulator seal material (270) between said anode can and cathode can; wherein the open end of the anode can resides within the open end of the cathode can with a portion of the cathode can side wall overlapping a portion of the anode can side wall with insulating seal material in between; and
wherein said insulator seal takes the form of an insulator seal ring having a plurality of protrusions (275) emanating from an inside surface of an insulator ring side wall (273) of said insulator seal ring, the protrusions facing the anode can side wall.

2. The cell of claim 1, wherein said protrusions are compressed against the anode can side wall.

3. The cell of claim 2 wherein said insulator seal ring also has protrusions (276) emanating from an outside surface of said insulator ring side wall, wherein said protrusions emanating from the outside surface of said insulator ring side wall are compressed against the cathode can side wall.

4. The cell of claim 2 wherein there is adhesive included at the interface between the inside surface of said insulator ring side wall and the outside surface of said anode can side wall.

5. The cell of claim 4 wherein said adhesive coats the inside surface of said insulator ring side wall and said protrusions emanating therefrom.

6. The cell of claim 3 wherein there is adhesive included at the interface between the outside surface of said insulator ring side wall and the inside surface of said cathode can side wall.

7. The cell of claim 6 wherein said adhesive coats the outside surface of said insulator ring side wall and said protrusions emanating therefrom.

8. The cell of claim 1 wherein said protrusion emanating from the inside surface of said insulator seal ring are of the same material and integral with said insulator seal ring.

9. The cell of claim 1 wherein said protrusions emanating from the inside surface of said insulator ring side wall comprise globs of material which are spaced apart from each other.

10. The cell of claim 1 wherein said protrusions emanating from the inside surface of said insulator ring side wall comprise globs of material which are spaced apart and aligned in a plurality of spaced apart substantially horizontal rows when viewed with the cell in vertical position with the closed end of the cathode can on top.

11. The cell of claim 1 wherein said protrusions emanating from the inside surface of said insulator ring side wall comprise elongated ribs of material which are aligned in a plurality of spaced apart substantially horizontal rows when viewed with the cell in vertical position with the closed end of the cathode can on top.

12. The cell of claim 11 wherein at least some of the ribs lying in the same horizontal row are segmented so that there is a space between the ends of adjacent ribs.

13. The cell of claim 3 wherein said protrusion emanating from the outside surface of said insulator seal ring are of the same material and integral with said insulator seal ring.

14. The cell of claim 3 wherein said protrusions emanating from the outside surface of said insulator ring side wall comprise globs of material which are spaced apart from each other.

15. The cell of claim 3 wherein said protrusions emanating from the outside surface of said insulator ring side wall comprise globs of material which are spaced apart and aligned in a plurality of spaced apart substantially horizontal rows when viewed with the cell in vertical position with the closed end of the cathode can on top.

16. The cell of claim 3 wherein said protrusions emanating from the outside surface of said insulator ring side wall comprise elongated ribs of material which are aligned in a plurality of spaced apart substantially horizontal rows when viewed with the cell in vertical position with the closed end of the cathode can on top.

17. The cell of claim 16 wherein at least some of the ribs lying in the same horizontal row are segmented so that there is a space between the ends of adjacent ribs.
